# FASCICULE DE BREVET EUROPEEN

(11) **EP 1 068 085 B1**
(45) Date de publication et mention de la délivrance du brevet: **02.01.2003**
(21) Numéro de dépôt: 99913356.4
(22) Date de dépôt: 01.04.1999
(51) Int. Cl.: B60G 17/08, F16F 9/19

(54) **DISPOSITIF DE SUSPENSION ET D'AMORTISSEMENT A DEUX COMBINES SUSPENSION-AMORTISSEUR**
AUFHÄNGUNGS- UND DÄMPFUNGSVORRICHTUNG MIT ZWEI AUFHÄNGUNGS- UND DÄMPFUNGS-EINHEITEN
SUSPENSION AND DAMPING DEVICE WITH TWO SUSPENSION-DAMPER COMBINATIONS

(30) Priorité: 01.04.1998 FR 9804266
(43) Date de publication de la demande: 17.01.2001
(73) Titulaire: Solution "F", 13770 Venelles (FR); Lagar, Jean-Paul, 81000 Albi (FR)
(72) Inventeur: LAGAR, Jean-Paul, F-81000 Albi (FR)
(74) Mandataire: Intès, Didier Gérard André
(86) Numéro de dépôt international: FR9900758
(87) Numéro de publication internationale: WO99050081

(56) Documents cités:
- WO-A-92/01579
- WO-A-92/02382
- FR-A- 1 073 827
- GB-A- 764 594

## Description

La présente invention concerne un dispositif de suspension et d'amortissement comprenant un cylindre d'amortissement et un premier piston mobile dans ce cylindre, une première et une deuxième chambre contenant du fluide d'amortissement hydraulique étant respectivement ménagées de part et d'autre de ce premier piston, ce dernier étant muni de moyens pour réguler le passage du fluide entre les première et deuxième chambres, le dispositif comportant, en outre, des premiers moyens de suspension raccordés au premier piston au voisinage d'une première extrémité du cylindre d'amortissement.

On connaît des dispositifs de ce type, dans lesquels les premiers moyens de suspension peuvent être constitués par un ressort mécanique (par exemple un ressort hélicoïdal) ou par un ressort pneumatique (du type fonctionnant à l'aide d'un gaz compressible contenu dans une enceinte correctement délimitée au voisinage de la première extrémité du cylindre d'amortissement).

Ces dispositifs connus donnent globalement satisfaction. Toutefois, ils ne sont généralement adaptés à fournir la réponse optimale pour assurer la suspension du véhicule et l'amortissement des oscillations de ce dernier que sur un seul type de terrain. Ainsi, un dispositif de suspension et d'amortissement réglé pour une route de qualité bonne ou moyenne risque de ne donner que de piètres résultats en matière de suspension et d'amortissement lorsque le véhicule roule sur un terrain moins régulier tel qu'un chemin ou une route pavée.

On connaît également, par GB-A-764 594, qui est considéré comme étant l'état de la technique le plus proche selon le préambule de la revendication 1, un dispositif de suspension et d'amortissement comprenant un cylindre d'amortissement, un premier piston et un deuxième piston mobiles dans ce cylindre, ainsi que des première, deuxième et troisième chambres contenant du fluide d'amortissement hydraulique, le premier piston étant disposé entre les première et deuxième chambres, tandis que le deuxième piston est disposé entre les deuxième et troisième chambres, le dispositif comportant, en outre, des premiers moyens de suspension raccordés au premier piston au voisinage d'une première extrémité du cylindre d'amortissement et des deuxièmes moyens de suspension raccordés au deuxième piston au voisinage dudit cylindre d'amortissement.

Ces amortisseurs ont des sens d'action uniques et opposés, c'est-à-dire que le premier piston et les premiers moyens d'amortissement amortissent seulement les sollicitations dans un sens, tandis que le deuxième piston et les deuxièmes moyens d'amortissement amortissent seulement dans l'autre sens, ce qui ne permet pas au système de suspension d'amortir plusieurs types de sollicitations rencontrées au cours d'un parcours.

En particulier, malgré la présence de deux pistons et de deux moyens d'amortissement, ce système ne s'adapte pas à différents types de routes.

Le document WO-A-92 02382 décrit quant à lui un système de suspension à deux pistons et trois chambres avec deux ressorts d'amortissement disposés en parallèle. Le passage du fluide est régulé entre les premiere et deuxième chambres. Ce document ne présente pas deux combinés ayant chacun un ressort et un amortisseur, ce qui ne permet qu'une adaptation partielle du système de suspension aux différents types de sollicitations rencontrés sur un terrain irrégulier.

L'invention s'applique à un dispositif ayant un premier et un deuxième piston, ainsi que des premiers et des deuxièmes moyens de suspension qui leur sont respectivement raccordés. Elle vise à améliorer l'état de la technique précité pour proposer un dispositif adapté à plusieurs types de sollicitations.

Ce but est atteint grâce au fait que le premier piston est muni de moyens pour réguler le passage du fluide entre les première et deuxième chambres, dans les deux sens de circulation entre lesdites chambres et au fait que le deuxième piston est muni de moyens pour réguler le passage du fluide entre les deuxième et troisième chambres, dans les deux sens de circulation entre lesdites chambres, le premier combiné formé par le premier piston et les premiers moyens de suspension et le deuxième combiné formé par le deuxième piston et les deuxièmes moyens de suspension étant adaptés pour des sollicitations dans des gammes de fréquences différentes.

Le dispositif selon l'invention comprend donc deux combinés suspension-amortisseur disposés en série ; en effet, la partie amortisseur du dispositif se comporte pratiquement comme deux amortisseurs disposés en série, le premier amortisseur comprenant le premier piston et les première et deuxième chambres, tandis que le deuxième amortisseur comprend le deuxième piston et les deuxième et troisième chambres. Les deux combinés en série se complètent l'un l'autre et le dispositif est finalement capable de donner une réponse satisfaisante dans des situations très variées.

On choisit avantageusement les réglages de telle sorte que l'amortissement et les moyens de suspension du premier combiné procurent globalement des réponses analogues à celles qui sont données par les combinés classiquement utilisés sur le véhicule considéré. Ainsi, la raideur des premiers moyens de suspension et le freinage du premier amortisseur correspondront souvent à des valeurs courantes.

Dans ce cas, on choisit plutôt les réglages de l'amortisseur et des moyens de suspension du deuxième combiné de telle sorte que ce dernier soit doté d'une course de piston plus faible et n'assure qu'un amortissement moins freiné (plus libéré). Ainsi, la raideur et la précharge des deuxièmes moyens de suspension pourront alors être déterminées de façon à ce que le deuxième piston se trouve dans une position voisine de sa mi-course du deuxième combiné, lorsque le véhicule est dans une position statique. On peut ainsi choisir, soit une raideur plus forte avec une précharge plus faible, soit une raideur plus faible avec une précharge plus importante que celles utilisées sur le premier combiné. Le freinage des deuxièmes moyens de suspension sera nettement plus faible que celui des moyens de suspension de combinés "classiques" utitisés sur le même type de véhicule.

Avec de tels réglages, le dispositif selon l'invention peut répondre de manière satisfaisante à des sollicitations de fréquence proche de la fréquence de résonance des masses suspendues du véhicule (de l'ordre de 1Hz et jusqu'à 4-5Hz, telles que celles auxquelles est soumis un véhicule circulant sur une route goudronnée de qualité moyenne ou bonne) par l'intermédiaire du premier combiné, ainsi qu'à des sollicitations de fréquence plus élevée (de l'ordre de 10Hz et plus, telles que celles auxquelles est soumis un véhicule circulant sur un chemin ou une voie pavée) par l'intermédiaire du deuxième combiné.

Les moyens pour réguler le passage du fluide entre les première et deuxième chambres sont généralement constitués par des passages contrôlés qui laissent passer le liquide à travers le piston pour permettre son déplacement dans les deux sens à l'intérieur du cylindre d'amortissement, ces passages étant dimensionnés de manière à assurer une résistance au déplacement du piston, résistance qui conditionne le freinage d'amortissement. Dans certaines situations, il est toutefois souhaitable que le piston puisse se déplacer plus rapidement. C'est en particulier le cas à l'occasion de pertes d'adhérence d'une roue qui, après avoir été soumise à une forte charge, ne peut descendre suffisamment vite pour toucher le sol lorsqu'elle passe au droit d'une ornière. Pour augmenter l'adhérence, il serait souhaitable de permettre un "défreinage" quasi instantané du piston amortisseur pour faire en sorte que, dans une telle situation, la roue puisse descendre très rapidement et entrer en contact avec le sol.

Une telle fonction de défreinage a déjà été proposée dans des amortisseurs hydropneumatiques, dans lesquels on utilise une masselotte à inertie capable de libérer le freinage de l'amortisseur en détente brutale. Le fonctionnement de ce système n'est pas tout à fait satisfaisant, dans la mesure où le déplacement de la masselotte n'est pas contrôlé, ce qui induit parfois un défreinage trop important, qui peut se prolonger une fois que la roue a retrouvé le contact avec le sol et se fait donc au détriment de l'amortissement. De plus, un système de ce type comporte un grand nombre de pièces et son prix de revient est, par conséquent, très élevé.

Pour remédier à ces inconvénients et assurer une fonction de défreinage améliorée, le dispositif selon l'invention comporte avantageusement, en outre, des moyens de mise en communication de la première et de la deuxième. chambre susceptibles d'être activés en fonction de la position du deuxième piston.

Ces moyens de mise en communication de la première et de la deuxième chambre permettent d'assurer la fonction de défreinage rapide, par exemple utilisée dans le cas d'une perte d'adhérence d'une roue. En effet, la position du deuxième piston est évidemment directement liée à la charge à laquelle il est soumis. Pour assurer le défreinage en cas de perte d'adhérence, il suffit de faire en sorte que la position du deuxième piston correspondant à l'activation des moyens de mise en communication soit obtenue dans une situation dans laquelle ce deuxième piston est délesté et soumis à la seule contrainte du poids de la roue. On comprend que, les première et deuxième chambres étant alors mises en communication, le déplacement du premier piston n'est pratiquement plus freiné, de sorte qu'il peut très rapidement occuper une position "d'étirement maximum" qui permet à la roue d'entrer rapidement en contact avec le sol. Lorsque ce contact est établi, le deuxième piston se trouve soumis à une charge liée à l'appui du véhicule sur le sol et revient dans une position dans laquelle les moyens de communication sont désactivés, pour que l'amortissement reprenne normalement.

Ainsi, le deuxième combiné permet, selon que les moyens de mise en communication sont plus ou moins activés, de réguler l'amortissement en détente du premier combiné. Ce dispositif est plus simple que le système à masselotte de l'art antérieur, donc moins coûteux. De plus, le défreinage peut être automatiquement contrôlé par la plus ou moins grande activation des moyens de mise en communication.

Si l'on choisit de faire en sorte que le deuxième combiné ait une raideur plus élevée et/ou un amortissement plus faible que le premier, on s'assure qu'en cas de perte d'adhérence d'une roue à laquelle est raccordé le dispositif, le deuxième combiné soit rapidement et préférentiellement sollicité en détente, ce qui permet au deuxième piston de venir occuper sa position correspondant à l'activation des moyens de mise en communication.

Selon une première variante avantageuse, les moyens de mise en communication de la première et de la deuxième chambre comprennent un passage de communication présentant une première ouverture située dans la première chambre et une deuxième ouverture située dans la région de la deuxième chambre, cette deuxième ouverture étant susceptible d'être plus ou moins obturée par le deuxième piston en fonction de la position qu'occupe ce dernier dans la deuxième chambre. Dans ce cas, les moyens de mise en communication des première et deuxième chambres sont réalisés de façon simple et, en particulier, ils peuvent être directement activés ou désactivés en fonction de la position du deuxième piston, par obturation de la deuxième ouverture, sans qu'il soit nécessaire de prévoir des moyens de contrôle supplémentaires.

Selon une autre variante avantageuse, les moyens de mise en communication de la première et de la deuxième chambre comprennent un passage traversant le premier piston équipé d'une vanne commandée et des moyens de commande de ladite vanne susceptibles d'être activés ou désactivés en fonction de la position du deuxième piston.

Avantageusement, pour compenser le volume de la tige de manoeuvre du piston mobile on utilise un réservoir de compensation du type décrit dans le brevet FR-A-1 055 443 ou du type connu sous le nom d'amortisseur à "bi-tube".

En effet, le volume de la tige de manoeuvre du piston entrant dans le cylindre d'amortissement doit correspondre au même volume de liquide d'amortissement hydraulique évacué de ce même cylindre. Le réservoir de compensation est le plus souvent composé de deux chambres, une chambre hydraulique remplie de liquide d'amortissement et une chambre supplémentaire séparée de la chambre hydraulique par, par exemple, un piston flottant et contenant un gaz sous pression. De plus, il peut exister à l'entrée de la chambre hydraulique du réservoir des moyens pour réguler le passage du fluide entre le cylindre d'amortissement et le réservoir. La pressurisation et les moyens pour réguler le passage du fluide permettent, en principe, lors de la phase de compression de l'amortisseur, d'éviter le phénomène de cavitation dans la première chambre du cylindre d'amortissement en créant une résistance à l'évacuation du fluide vers le réservoir, facilitant ainsi le remplissage de la première chambre au travers des passages du piston.

Malgré la pressurisation de ce réservoir et les moyens pour réguler le passage du fluide du cylindre d'amortissement au réservoir, il peut arriver, lors de chocs en compression répétés et/ou très violents, que le phénomène de cavitation apparaisse dans la première chambre. La compression est alors suivie d'une détente instantanée et non contrôlée (pas de freinage) le temps que la cavitation disparaisse. Ce rebond intempestif éjecte le véhicule, ce qui peut être la cause d'accidents graves.

Pour remédier à ces inconvénients et combattre avec efficacité les risques de cavitation dans le cylindre d'amortissement, le dispositif selon l'invention comporte avantageusement, en outre, des moyens de mise en communication de la chambre hydraulique du réservoir de compensation et de la première chambre et/ou de la troisième chambre du cylindre d'amortissement. Ces moyens de mise en communication comportent un clapet n'autorisant le passage du fluide que du réservoir de compensation vers la chambre à laquelle il est raccordé. Ainsi, lors d'un choc même très violent, l'arrivée de fluide par cette communication permet d'éviter la cavitation dans la chambre considérée, puis la fermeture du clapet assure un fonctionnement contrôlé de la phase de détente.

Le combiné suspension-amortisseur conforme à l'invention permet donc d'assurer une réponse optimale à différentes sollicitations. Si les moyens de mise en communication des première et deuxième chambres sont présents, il permet également un défreinage de la phase de détente lors d'une perte d'adhérence de la roue. En outre, s'il est équipé d'un système anticavitation ayant des moyens de mise en communication d'une chambre hydraulique d'un réservoir de compensation avec la première et/ou la troisième chambre, il permet d'éviter le retour brutal causé par une cavitation de la chambre considérée.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
- la Figure 1 est une vue en coupe axiale d'un dispositif conforme à l'invention,
- les Figures 2, 3, 4 et 5 sont des vues analogues à la Figure 1 montrant quatre variantes du dispositif,
- les Figures 6 et 7 montrent des détails de deux variantes, en vue selon la flèche VI de la Figure 2, et
- la Figure 8 montre un détail d'une variante, en vue selon la flèche VIII de la Figure 2.

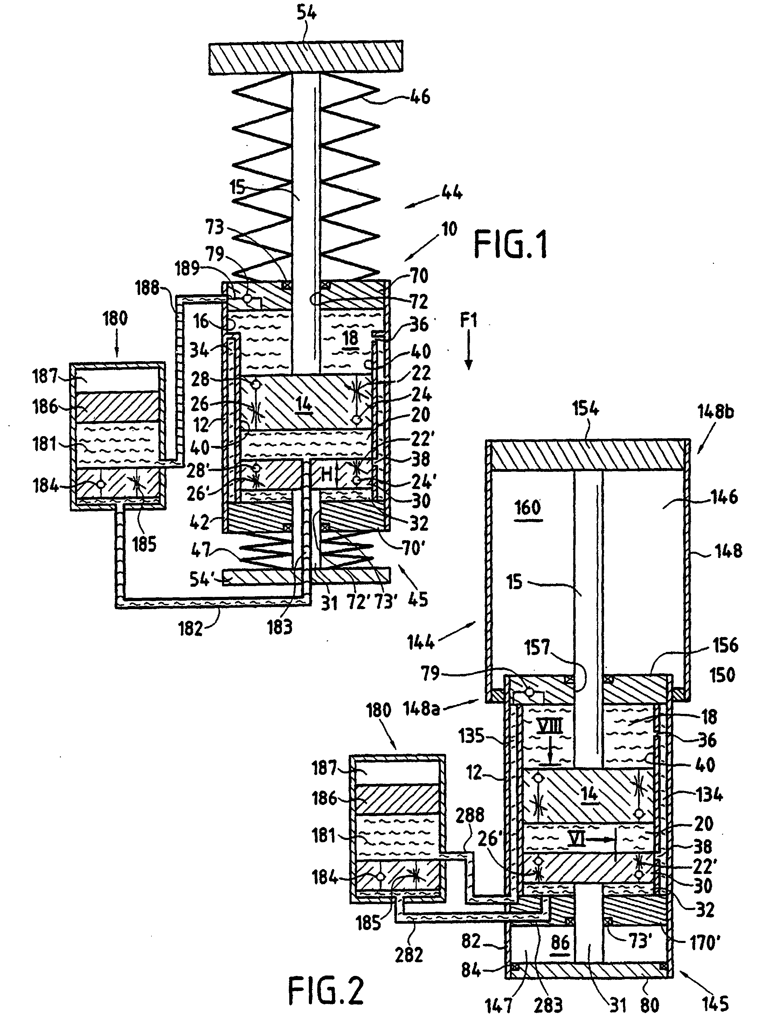

La Figure 1 montre un dispositif de suspension et d'amortissement 10 comprenant un cylindre d'amortissement 12 et un premier piston 14 mobile dans ce cylindre. Ce piston coulisse dans l'intérieur calibré 16 du cylindre et divise l'intérieur de ce dernier en une première chambre 18 et une deuxième chambre 20 qui sont remplies d'un fluide d'amortissement hydraulique approprié, en général de l'huile hydraulique. Lorsque le dispositif est soumis à de fortes charges, c'est-à-dire lorsque l'amortisseur fonctionne en compression, le piston 14 se déplace dans le sens de la flèche F1 et pénètre plus avant à l'intérieur du cylindre 12, de sorte que le volume de la deuxième chambre 20 se trouve réduit tandis que celui de la première chambre 18 augmente. Le phénomène inverse, avec un déplacement dans le sens opposé à la flèche F1, se produit à la détente.

L'amortissement est réalisé grâce au fait que le piston 14 est muni de moyens pour réguler le passage du fluide entre les première et deuxième chambres 18 et 20 qui génèrent des forces résistantes freinant le déplacement du piston dans l'un ou dans l'autre sens. Ces moyens comportent, d'une part, au moins une première restriction 22, située dans un premier passage équipé d'un clapet anti-retour 24 et, d'autre part, au moins une deuxième restriction 26, située dans un deuxième passage également équipé d'un clapet anti-retour 28. Le clapet anti-retour 24 ne permet l'ouverture du passage dans lequel se trouve la restriction 22 que lors d'un déplacement du piston 14 dans le sens de la flèche F1, de sorte que la restriction 22 est utilisée lors d'une sollicitation en compression. En revanche, le clapet 28 n'ouvre le passage dans lequel est située la restriction 26 que lors d'un déplacement dans le sens opposé à la flèche F1, de sorte que cette restriction 26 est utilisée lors d'une sollicitation en détente. Les restrictions 22 et 26 peuvent être à passage fixe et/ou à passage variable, réglable ou non. En pratique, deux séries comprenant chacune plusieurs passages équipés de clapets et de restrictions sont prévues dans le piston pour respectivement créer les forces résistantes dans l'un et l'autre sens.

Le dispositif représenté sur la Figure 1 comporte un deuxième piston 30, également mobile dans le cylindre d'amortissement 12. La deuxième chambre 20 précitée est ménagée entre les premier et deuxième pistons, tandis qu'une troisième chambre 32 est ménagée de l'autre côté du deuxième piston 30. Celui-ci est muni de moyens pour réguler le passage du fluide entre la deuxième chambre 20 et la troisième chambre 32, ces moyens comportant par exemple des ensembles de restrictions et de clapets 22', 24', 26' et 28', respectivement analogues à ceux qui équipent le premier piston.

Le dispositif comporte encore des moyens de mise en communication de la première chambre 18 et de la deuxième chambre 20 qui comprennent un passage de communication 34 présentant une première ouverture 36 située dans la région de la première chambre 18 et une deuxième ouverture 38 située dans la région de la deuxième chambre 20. Comme on le voit sur la Figure 1, le passage de communication 34 est avantageusement formé dans un espace annulaire délimité entre un élément de paroi interne 40 du cylindre 12 et un élément de paroi externe 42 de ce cylindre. Les pistons 14 et 30 coulissent avec étanchéité le long de l'élément de paroi interne 40.

La deuxième ouverture 38 est réalisée dans une partie du cylindre qui se trouve sur le trajet du deuxième piston dans son mouvement de déplacement. Cette ouverture est donc susceptible d'être plus ou moins obturée par la paroi cylindrique axiale du deuxième piston en fonction de la position qu'occupe ce dernier dans la deuxième chambre. En phase de détente du piston 30, lorsque le volume de la chambre 20 est pratiquement maximal, l'ouverture 38 se trouve effectivement dans cette chambre. En revanche, en phase de compression, le volume de la chambre 20 est diminué et l'ouverture 38 ne se trouve plus dans cette chambre mais en regard de la paroi axiale du piston 30. L'indication selon laquelle l'ouverture 38 se trouve dans la région de la deuxième chambre 20 signifie qu'elle débouche dans cette chambre au moins dans une position (en particulier une position de détente) du piston 30, qui joue le rôle d'un tiroir par rapport à cette ouverture.

Le dispositif comprend des premiers et des deuxièmes moyens de suspension 44 et 45 qui sont respectivement raccordés au premier piston 14 et au deuxième piston 30 et qui, dans l'exemple représenté, comportent chacun un ressort mécanique, respectivement 46 et 47.

La première chambre 18 est fermée, du côté opposé au piston 14, par des moyens d'obturation étanche 70. Il s'agit par exemple d'un bouchon fixé de manière étanche à la paroi du cylindre 12 et comportant un perçage central 72 dans lequel coulisse une tige 15 reliée au piston 14 par des moyens appropriés. Bien entendu, le coulissement de la tige se fait de manière étanche, l'étanchéité étant assurée par un joint 73 situé dans le perçage 72. A son extrémité opposée au piston 14, la tige 15 porte une plaque d'arrêt 54. Le ressort 46 est disposé entre le bouchon d'obturation 70 et cette plaque d'arrêt 54.

De même, la chambre 32 est fermée par un bouchon 70' ayant un perçage 72' dans lequel coulisse la tige 31 du piston 30 avec étanchéité grâce au joint 73'. Le ressort 47 est disposé entre le bouchon 70' et la plaque d'arrêt 54'.

Les plaques d'arrêt 54 et 54' peuvent être respectivement fixées au châssis et à une roue d'un véhicule. La Figure 1 montre le dispositif lorsqu'il est soumis à une charge moyenne, par exemple due au poids du véhicule lorsqu'il est à l'arrêt. Les deux pistons occupent alors des positions intermédiaires et, si une charge plus importante est exercée, les volumes des chambres 18 et 32 peuvent augmenter tandis que celui de la chambre 20 diminue, alors qu'en cas de détente, les volumes des chambres 18 et 32 peuvent diminuer tandis que celui de la chambre 20 augmente. L'ouverture 38 du passage de communication annulaire 34 est disposée de manière à être masquée par le piston 30 dans les conditions de charge moyenne et à s'ouvrir dans la chambre 20 pour des charges plus faibles.

En fait, pour des charges moyennes, le volume de la chambre 20 se trouve délimité juste au-dessus de cette ouverture 38. La hauteur axiale H du piston 30 est déterminée de telle sorte que l'ouverture 38 reste masquée par ce piston même lorsque ce dernier occupe sa position de compression maximale. En d'autres termes, l'ouverture 38 ne peut pas communiquer avec le fluide contenu dans la troisième chambre 32, même lorsque le piston 30 est au bout de sa course de compression. En revanche, l'ouverture 38 se trouve située au voisinage de l'extrémité supérieure du piston 30 lorsque celui-ci occupe sa position intermédiaire conditionnée par des charges moyennes.

Ainsi, si la roue équipée du dispositif perd l'adhérence avec le sol, le piston 30 est sollicité en détente, c'est-à-dire qu'il est déplacé dans le sens tendant à sortir du cylindre 12. A cette occasion, l'ouverture 38 se trouve peu à peu dégagée et le fluide peut librement communiquer entre les chambres 18 et 20, ce qui permet d'accélérer la détente du piston 14 pour que la roue retrouve rapidement le contact avec le sol. Cette détente accélérée se poursuit jusqu'à ce que l'on retrouve une charge suffisante pour comprimer le ressort 47 et solliciter le piston 30 dans le sens contraire à la flèche F1 pour refermer l'ouverture 38. Le ressort 47 est un ressort de compression. Le clapet 24' et la restriction 22' peuvent être réglés de manière à ne freiner que faiblement le déplacement du piston 30 lors de la détente, ce qui permet de faire en sorte que celui-ci libère rapidement l'ouverture 38.

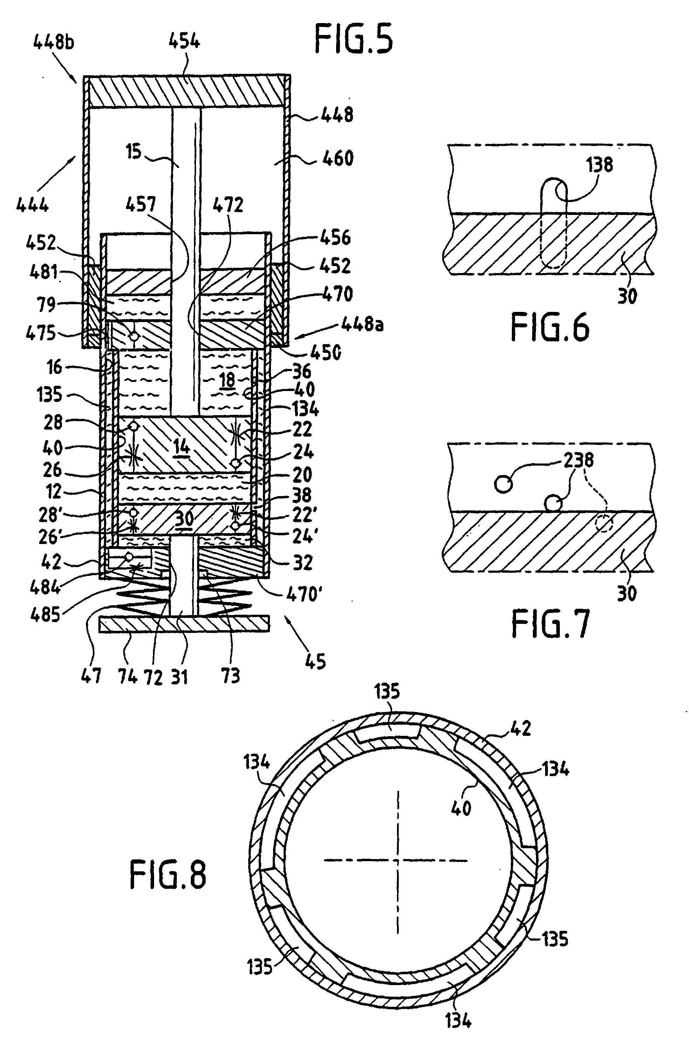

De manière avantageuse, comme on le voit sur les Figures 6 et 7, l'ouverture 38 peut s'étendre sur une portion déterminée de la course du piston 30, ce qui permet de faire en sorte que les moyens de mise en communication des chambres 18 et 20 soient plus ou moins ouverts selon la position du piston. Ainsi, selon la Figure 6, cette ouverture a la forme d'une lumière verticale 138, la Figure 6 montrant une position du piston 30 dans laquelle ce dernier masque environ les deux tiers de cette ouverture. La Figure 7 montre une autre variante dans laquelle l'ouverture comporte une pluralité d'orifices 238 étagés les uns par rapport aux autres, c'est-à-dire qu'ils se situent à des niveaux horizontaux différents.

Ces dispositions permettent de concevoir les moyens de mise en communication de la première et de la deuxième chambre comme un système auxiliaire des moyens de régulation du passage du fluide entre les première et deuxième chambres situées de part et d'autre du piston 14. On peut en effet choisir que, pour une position de charge moyenne du piston 30, seule une partie de l'ouverture 38 (par exemple la partie inférieure de la lumière 138 ou l'orifice 238 qui se trouve le plus bas) soit obturée par ce piston. Dans ces conditions, l'amortissement du piston 14 tant en compression qu'en détente se voit diminué puisque le fluide ne passe pas seulement par les passages contrôlés des restrictions 22 ou 26, mais également par le passage de communication 34. En revanche, en cas de forte charge, le piston 30 peut masquer totalement l'ouverture 38 (il bouche l'intégralité de la fenêtre 138 ou tous les orifices 238) de telle sorte qu'un amortissement maximum du déplacement du piston 14 est obtenu puisque le fluide ne peut passer que par les restrictions 22 ou 26 entre les première et deuxième chambres.

Pour éviter les phénomènes de cavitation dans l'enceinte 12, une chambre réservoir 180, du type décrit dans le brevet FR-A-1 055 443, est prévue dans la variante de la Figure 1. Elle comporte une enceinte 181 contenant du fluide hydraulique, raccordée à la chambre 20 par une conduite 182 qui comprend un tronçon 183 s'étendant à travers la tige 31 et le piston 30. Le raccord entre le conduit 182 et l'enceinte 181 comprend un clapet 184 permettant le passage du fluide de l'enceinte 181 vers la chambre 20. Lors d'une diminution du volume de la chambre 20, le fluide en excès peut revenir dans l'enceinte 181 par une restriction 185. De manière connue en soi, la pression est maintenue dans l'enceinte 181 grâce à un piston flottant 186 qui la sépare d'une enceinte supérieure 187 contenant du gaz tel que de l'azote.

Pour éviter encore mieux les phénomènes de cavitation dans l'enceinte 12 qui pourraient se créer lors d'un enfoncement très rapide dû à un choc brutal, une communication est prévue entre l'enceinte 181 du réservoir 180 et la première chambre 18 du cylindre 12. Cette communication est réalisée par une conduite 188, dont un tronçon 189 s'étend dans le bouchon 70 de manière à déboucher dans la chambre 18. Sur ce tronçon est disposé un clapet anti-retour 79 empêchant la circulation du fluide de la chambre 18 vers le réservoir 180. Ce clapet 79 peut-être ou non du type taré à l'ouverture pour une pression, par exemple, de l'ordre de celle existant dans le réservoir 180. Ainsi, lors de la phase de compression, le clapet 79 n'autorisera le passage qu'à partir du moment où la différence de pression entre le réservoir 180 et la chambre 18 sera suffisante. De ce fait la phase de compression n'est pas perturbée et la phase de détente est exempte de cavitation.

La variante de la Figure 2 diffère de celle de la Figure 1 en ce que les premiers et deuxièmes moyens de suspension 144 et 145 comprennent chacun un ressort pneumatique, respectivement 146 et 147.

Plus précisément, le ressort 146 comprend un cylindre dit "de suspension" 148 apte à coulisser sur le cylindre d'amortissement 12 et présentant à cet effet un diamètre supérieur à celui de ce dernier. L'extrémité 148a de ce cylindre est fermée sur la paroi du cylindre 12 par des moyens 150 assurant l'étanchéité tout en permettant le coulissement relatif des deux cylindres. L'autre extrémité 148b du cylindre 148 est obturée par des moyens d'obturation étanche 154. La tige 15 du premier piston 14 est raccordée à ces moyens d'obturation 154, de telle sorte que ce piston et le cylindre 148 sont solidaires en déplacement. Du côté opposé au piston 14, la première chambre 18 est fermée par des moyens d'obturation 156 situés au voisinage de l'extrémité du cylindre 12. Ces moyens d'obturation comportent un perçage central 157 dans lequel coulisse la tige 15 du piston 14. Des moyens d'étanchéité sont disposés dans le perçage 157 pour coopérer avec la tige. L'enceinte 160 délimitée par la paroi du cylindre 148, les moyens d'obturation 154, les moyens d'étanchéité 150 et les moyens d'obturation 156, contient du gaz de suspension sous pression. La raideur du ressort pneumatique 144 est fonction du volume de gaz contenu dans l'enceinte 160 et de sa pression initiale.

En ce qui concerne les deuxièmes moyens de suspension, la tige 31 du deuxième piston 30 est raccordée à une plaque 80. Le cylindre 12 est prolongé au-delà du bouchon 170' (qui ferme la chambre 32 du côté opposé au piston 30) par un tube 82 formant un cylindre de suspension. La plaque de piston 80 est susceptible de coulisser de manière étanche à l'intérieur du tube 82, des moyens d'étanchéité 84 étant prévus à cet effet. L'espace délimité par le bouchon 170', la plaque 80 et l'intérieur du tube 82 constitue une chambre 86 qui peut être remplie de gaz sous pression.

Cette variante diffère également de celle de la Figure 1 en ce que le raccordement du réservoir 180 ne se fait non plus à la deuxième chambre 20 mais à la troisième chambre 32. En effet, dans le cas d'un réglage très libéré des moyens 22' et 26' pour réguler le passage du fluide entre la deuxième chambre 20 et la troisième chambre 32, ces passages peuvent également servir pour la petite circulation du fluide de l'enceinte 12 vers le réservoir 180 nécessaire pour compenser le volume relativement faible des tiges 15 et 31 en mouvement.

Plus précisément, le réservoir 180 est raccordé à la chambre 32 par un conduit 282 qui comprend un tronçon 283 s'étendant à travers le bouchon 170' de manière à déboucher dans la chambre 32.

De plus, dans cette deuxième version, le coulissement étanche de l'extrémité 148a sur la paroi du cylindre 12 ne permet plus de raccorder l'enceinte 181 du réservoir 180 à la première chambre 18 de la même manière que celle utilisée dans la première version (Figure 1). Dans ce cas, le raccordement est réalisé par un conduit 288 qui, partant de l'enceinte 181, débouche dans un passage 135 à proximité de l'extrémité inférieure de l'enceinte 12, par exemple au travers du bouchon 170'. Le passage de communication 135 peut être formé dans un espace annulaire coaxial et extérieur au passage 34 de la Figure 1. Il peut toutefois avantageusement être formé par une ou plusieurs sections d'un espace annulaire analogue à celui de la Figure 1. Plus précisément, comme on le voit sur la figure 8, la paroi 40 peut définir un passage annulaire ayant plusieurs secteurs 134 et 135. Les secteurs 134 sont isolés des secteurs 135 et servent à la mise en communication des première et deuxième chambres 18 et 20 à l'instar du passage 34 de la Figure 1, tandis que les secteurs 135 servent à la communication entre le conduit 288 et la première chambre 18. La répartition et le nombre des secteurs 134 et 135 de la Figure 8 sont donnés à titre d'exemple non limitatif.

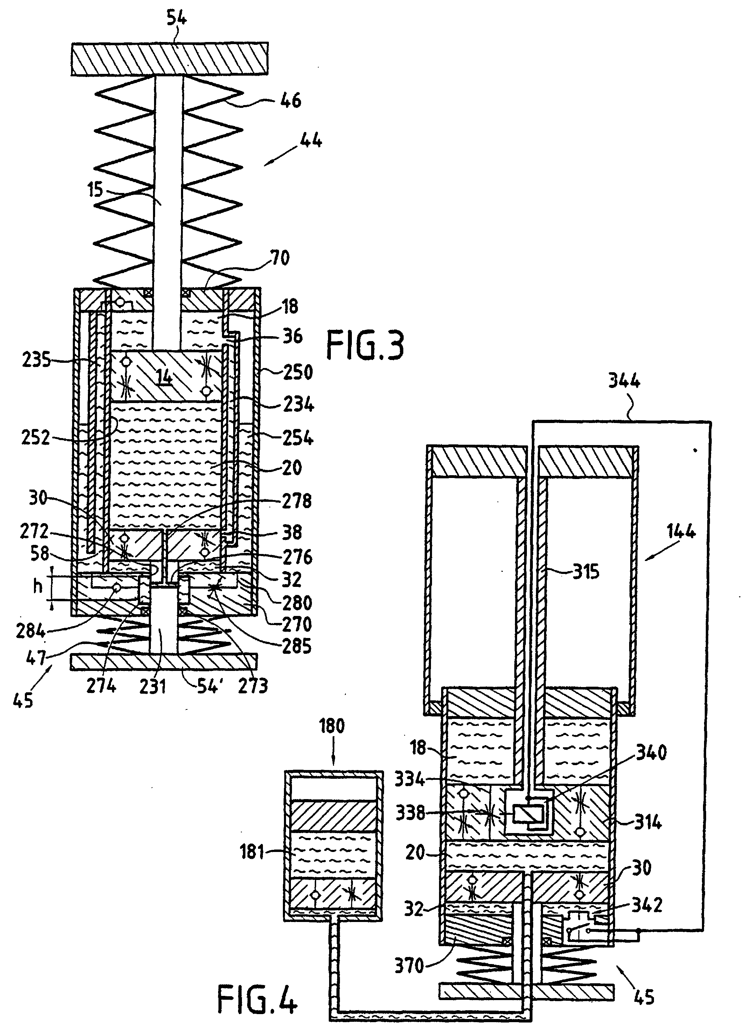

La Figure 3 montre une autre variante qui diffère de celle de la Figure 1 par les moyens permettant d'éviter la cavitation dans l'enceinte 12. Ces moyens utilisent un bi-tube pour le corps de la partie amortisseur du dispositif. Plus précisément, l'enceinte 12 comporte une paroi cylindrique externe 250 et une paroi cylindrique interne 252 entre lesquelles est ménagée une chambre annulaire 254 formant un réservoir pour du fluide hydraulique. Le bouchon 270 qui ferme l'enceinte 12 du côté des deuxièmes moyens de suspension 45 est muni d'un perçage 272 dans lequel coulisse de façon étanche la tige 231 du piston 30, grâce à un joint d'étanchéité 273.

Dans ce perçage 272 est ménagée une chambre de communication 274. La tige 231 du piston 30 comporte un perçage 276 qui communique avec un perçage 278 du piston 30 et avec la chambre 274 (ce perçage 276 a par exemple une forme en T). La chambre 274 a une hauteur axiale h au moins égale à la course du piston 30, de telle sorte que le perçage 276 peut communiquer avec elle quelle que soit la position du piston 30.

La chambre réservoir 254 est susceptible de communiquer avec la chambre de communication 274 par une conduite 280 réalisée dans le bouchon 270, sur laquelle un clapet 284 permet le passage du fluide seulement dans le sens allant vers la chambre 274 de telle sorte que, par l'intermédiaire des perçages 276 et 278, la chambre 20 peut se remplir lorsque son volume augmente. Une restriction 285 est également placée sur la conduite 280 pour permettre un retour régulé du fluide dans la chambre 254 lorsque le volume de la chambre 20 diminue. La pression est donc maintenue dans les chambres.

Toutefois, pour simplifier l'usinage de la mise en place de la communication du fluide de la chambre 20 vers le réservoir 254, on peut utiliser la solution de la variante représentée sur la Figure 2, qui consiste à faire passer le fluide à travers les moyens de régulation du piston 30 (s'ils sont suffisamment libérés). Il suffit pour cela de supprimer le conduit 278, la chambre 274 et de faire déboucher le clapet 284 et la restriction 285 directement dans la chambre 32.

On notera que les moyens de mise en communication des chambres 18 et 20 peuvent être analogues à ceux de la Figure 1. Toutefois, pour simplifier l'usinage, le passage entre ces chambres peut être réalisé par une conduite 234 rapportée dans la chambre 254 sur la paroi 252.

On peut en outre faire communiquer la première chambre 18 et l'enceinte 254 de la même façon que sur la figure 2. Ainsi, on peut pratiquer une ouverture dans la partie inférieure d'un passage analogue au passage 135 de la figure 2.

Toutefois, pour simplifier l'usinage, le passage entre l'enceinte 254 et la chambre 18 peut être réalisé par une conduite 235 rapportée dans la chambre 254 sur la paroi 252. Cette conduite possède une ouverture inférieure 58 qui la met en communication avec l'enceinte 254. La communication de cette conduite 235 à la chambre 18 est similaire à celle de la Figure 2, pour le passage 135.

Quelle que soit la variante choisie, on pourrait également réaliser le passage de mise en communication des chambres 18 et 20 en utilisant une conduite externe, voire même un tuyau flexible, raccordé à une ouverture, analogue à l'ouverture 38, prolongée dans la paroi de l'enceinte 12 pour lui permettre de communiquer avec la chambre 20, et reliée à la chambre 18 par tout moyen tel qu'une ouverture pratiquée dans la paroi de cette chambre ou un perçage, ménagé dans la tige du piston 14 et débouchant dans la chambre 18. Cette remarque est tout aussi valable en ce qui concerne la réalisation du passage de mise en communication des chambres 18 et 254.

La variante de la Figure 4 diffère de celle de la Figure 1 par les moyens de mise en communication des chambres 18 et 20 et par le fait que les premiers moyens de suspension 144 sont analogues à ceux de la Figure 2. Sur cette variante, la communication de l'enceinte 181 du réservoir 180 à la chambre 18 de l'enceinte 12, n'est pas représentée. Elle peut, toutefois, être installée de la même manière que sur la variante de la Figure 2. Les éléments inchangés, respectivement par rapport aux Figures 1 et 2, sont affectés des mêmes références que sur ces figures.

Sur la Figure 4, les moyens de mise en communication des chambres 18 et 20 comprennent un passage 334 qui traverse le premier piston 314 et qui est équipé d'une vanne commandée 338. Les moyens de commande de cette vanne sont susceptibles d'être activés ou désactivés en fonction de la position du deuxième piston 30. Ainsi, le piston 30 peut provoquer l'ouverture de la vanne 338 pour libérer la circulation du fluide entre les chambres 18 et 20 par le passage 334.

Plus précisément, dans l'exemple représenté, les moyens de commande de la vanne 338 comprennent un actionneur électromécanique 340, logé dans le piston 314 et raccordé à un organe d'actionnement 342 par un circuit de commande 344 passant à travers la tige 315 du piston 314. Dans l'exemple représenté, l'organe 342 est un contacteur qui, lorsqu'il est sollicité par la face inférieure du piston 30, ferme le circuit 344 afin d'alimenter l'actionneur 340 pour qu'il ouvre la vanne 338. Le contacteur 342 est installé dans le bouchon 370 et dépasse dans la chambre 32 au-delà de la face supérieure de ce bouchon. D'autres organes d'actionnement tels qu'une cellule photoélectrique situé sur la paroi de la chambre 32, ou analogues, sont envisageables. En choisissant un actionneur et un circuit adaptés, on peut faire en sorte que la vanne 338 soit plus ou moins ouverte en fonction de la position du piston 30.

Une autre version plus compacte, consiste à disposer l'actionneur électromécanique 340 à l'extérieur du combiné. L'action sur la vanne de commande 338 se faisant par une tige de manoeuvre qui passe à travers la tige 315 du piston 314. A la place de la tige de manoeuvre on peut également utiliser un circuit hydraulique passant à travers la tige 315. Une autre version encore consiste à disposer également la vanne de commande 338 à l'extérieur du combiné et de ménager une dérivation du circuit d'huile partant de la chambre 20 par un orifice dans le piston 314, passant à l'intérieur de la tige 315, traversant la vanne 338, repassant à l'intérieur de la tige 315 (un système de double circulation coaxiale ou non est pratiqué dans la tige 315) pour déboucher dans la chambre 18.

Bien entendu, les moyens de mise en communication illustrés par la variante de la Figure 4 peuvent être utilisés dans le dispositif conforme à l'invention, en choisissant, pour les moyens de suspension, des ressorts mécaniques ou pneumatiques et avec tous types de systèmes pour empêcher la cavitation.

On décrit maintenant la Figure 5 qui diffère de la Figure 1 en ce que la variante qu'elle représente comprend des premiers moyens de suspension pneumatiques 444 perfectionnés. Les éléments inchangés, respectivement par rapport aux Figures 1 et 2, sont affectés des mêmes références que sur ces figures.

Plus précisément, le dispositif comporte un cylindre dit "de suspension" 448, qui présente un diamètre supérieur à celui du cylindre d'amortissement 12 et est susceptible de coulisser sur ce dernier. Une première extrémité 448a du cylindre de suspension 448 (son extrémité inférieure sur la Figure 5) est fermée sur la paroi du cylindre d'amortissement 12 par des moyens d'obturation étanche 450 qui assurent l'étanchéité tout en permettant le coulissement relatif de ces deux cylindres. Pour faciliter ce coulissement, un guide 452 peut également être prévu entre les deux cylindres.

A sa deuxième extrémité 448b, le cylindre 448 est fermé par des moyens d'obturation 454 tels qu'un bouchon étanche. Le premier piston 14 a une tige 15 qui est solidaire du cylindre de suspension 448. Par exemple, cette tige qui est fixée de manière appropriée au premier piston 14, est également fixée aux moyens d'obturation 454. La tige permet donc de rendre solidaires le déplacement du cylindre 448 et celui du piston 14.

Un bouchon 470 est disposé dans le cylindre d'amortissement 12 de manière à fermer la première chambre 18 du côté opposé au premier piston 14. Sur la Figure 5, cette chambre est donc délimitée par la face supérieure du piston 14, par la paroi interne du cylindre 12 et par la face inférieure du bouchon 470. Ce dernier est pourvu d'un perçage 472 dans lequel peut coulisser la tige 15 du piston 14. Un moyen d'étanchéité (non représenté) est prévu pour assurer l'étanchéité entre le bouchon 470 et la tige 15.

Un piston de séparation 456 est disposé dans le cylindre d'amortissement 12 de manière à créer une chambre de compensation 481. Sur la Figure 5, cette chambre est donc délimitée par la face du bouchon 470 opposée à la chambre 18, par la paroi interne du cylindre 12 et par le piston séparateur 456. Ce dernier est un piston flottant qui est susceptible de coulisser à l'intérieur du cylindre d'amortissement 12 et flotte sur le fluide contenu dans la chambre 481. Ce piston 456 est pourvu d'un perçage 457 dans lequel peut coulisser la tige 15 du piston 14. Des moyens d'étanchéité (non représentés) sont prévus pour assurer l'étanchéité entre le piston 456 et la tige 15 et entre ledit piston 456 et la paroi interne du cylindre d'amortissement 12.

Une enceinte 460 est définie entre le piston de séparation 456 et les moyens d'obturation 454 de la deuxième extrémité du cylindre de suspension. Plus précisément, cette enceinte 460 est fermée par les moyens d'obturation 454, par la paroi cylindrique du cylindre 448, par les moyens d'étanchéité 450 entre les cylindres 12 et 448, et par le piston de séparation 456. Elle contient un gaz de suspension, en général un gaz compressible tel que de l'azote.

Sur la Figure 5, la chambre de compensation 481 agit exactement de la même manière que l'enceinte 181 de la Figure 1. Le réservoir auxiliaire est en fait intégré dans le combiné en utilisant le moyen de suspension (ici un ressort pneumatique) du premier combiné, comme force de pressurisation. Dans ce cas, le clapet anti-retour 184 et la restriction 185 des Figures 1 et 2 sont remplacés par un clapet anti-retour 484 et une restriction 485 respectivement similaires à ces premiers mais disposés cette fois dans le bouchon 470', de manière à faire communiquer la chambre 32 et la chambre 481 en passant par le passage 135 et le perçage de communication 475 pratiqué dans le bouchon 470.

Dans ce cas, le passage 135 n'est plus utilisé pour faire communiquer la chambre du réservoir auxiliaire et la chambre 18 (comme cela est le cas sur la Figure 2), mais pour faire communiquer la chambre 32 et la chambre 481 du réservoir auxiliaire "intégré". Malgré cette différence de circulation, les moyens de communication des chambres 18 et 20 (en passant par le passage 134) et le passage 135 sont en tout point conformes à la réalisation représentée sur les Figures 2 et 8. Le clapet anti-retour 79 est logé dans le bouchon 470 et autorise le passage du fluide de la chambre 481 vers la chambre 18.

Sur la Figure 5, la communication permettant la circulation de fluide de l'enceinte 12 vers le réservoir auxiliaire (la chambre 481) est réalisée de la même façon que sur la Figure 2, c'est-à-dire que la chambre 481 est raccordée à la troisième chambre 32 par un passage muni d'une restriction (485). En variante de la Figure 5, on peut toutefois imaginer une conception analogue à celle de la Figure 3 en raccordant la deuxième chambre 20 à la chambre 481, par l'intermédiaire de moyens analogues aux perçages 276, 278 et à la chambre 274, et par une conduite munie d'une restriction.

En se déplaçant par rapport au cylindre d'amortissement 12, le cylindre de suspension 448 joue le rôle d'un ressort pneumatique dont la raideur est fonction de la pression du gaz contenu dans la chambre 460. Le piston séparateur 456 peut se déplacer pour compenser le volume des tiges 15 et 31 entrant dans l'enceinte 12 lors d'une sollicitation en compression, ce piston séparateur remontant alors dans l'enceinte 460 pour réduire son volume en proportion.

Le fonctionnement du piston séparateur est en lui-même connu par le brevet FR-A-1 185 526. Toutefois, le fait de prévoir le bouchon 470, le passage 135 (qui permet de faire communiquer la deuxième ou la troisième chambre avec la chambre hydraulique 481 du réservoir de compensation), les clapets 79 et 484, ainsi que la restriction 485, permet d'éviter les phénomènes de cavitation qui, avec le système du brevet FR-A-1 185 526, existent dans la chambre située sous le piston 14 en cas de perte d'adhérence et de traction sur le combiné sous l'effet du poids de la roue.

La pression du gaz à l'intérieur de l'enceinte 460, qui s'exerce sur la face supérieure du piston séparateur 456, crée à l'origine une force qui correspond à la force statique admissible par le ressort pneumatique 444 et les premiers moyens d'amortissement comprenant le piston 14 et les chambres 18 et 20. Pour régler initialement la force statique désirée, on peut partiellement remplir l'enceinte 460 d'un fluide hydraulique qui, bien entendu, est incompressible. La quantité de fluide présente dans cette enceinte servira à régler le volume de gaz restant dans l'enceinte 460 en fin de course du piston 14. En choisissant convenablement ce volume et la pression du gaz à l'origine on détermine la gamme de raideur du ressort pneumatique.

Quelle que soit la variante choisie, pour permettre une réaction du dispositif à divers types de sollicitations, les premier et deuxième combinés respectivement formés par le premier amortisseur et les premiers moyens de suspension et par le deuxième amortisseur et les deuxièmes moyens de suspension, sont réglés différemment.

Pour ce faire, qu'ils soient mécaniques ou pneumatiques, on choisira avantageusement de doter les ressorts des premiers et deuxièmes moyens de suspension de raideurs différentes, de façon à leur permettre de répondre à des sollicitations différentes.

On règle de préférence le premier combiné de telle sorte qu'il puisse répondre à des sollicitations de fréquences moyennes et basses (de l'ordre de 1 à 4 ou 5Hz). Le volume initial des chambres 18 et 20, sous charge "normale", et donc la course maximale du premier piston sont choisis en conséquence. En revanche, on réglera plutôt le deuxième combiné de telle sorte qu'il soit capable de répondre à des sollicitations de haute fréquence (de l'ordre de 10Hz et plus). Pour ce faire, on choisira de faire en sorte que la course maximale du deuxième piston à l'intérieur des chambres 20 et 32 soit beaucoup plus faible que celle du piston 14, et on dotera le ressort des deuxièmes moyens de suspension d'une raideur et d'une précharge faisant en sorte que ce deuxième piston se trouve dans une position de l'ordre de la mi-course du deuxième combiné, lorsque le véhicule est en position statique, c'est-à-dire soumis à la seule charge de son poids. On peut ainsi choisir, soit une raideur plus forte avec une précharge plus faible, soit une raideur plus faible avec une précharge plus importante que celles utilisées sur le premier combiné.

On note que ces réglages sont donnés à titre d'exemple non limitatif. D'autres réglages peuvent être imaginés pour répondre à des sollicitations bien précises. Par exemple, lorsque les moyens de mise en communication des première et deuxième chambres sont présents et lorsque le piston du deuxième combiné sert à réguler le passage du fluide entre ces chambres (par exemple de la manière indiquée en référence aux figures 6 et 7), il peut être intéressant de doter le ressort du deuxième combiné d'une raideur relativement forte. De même, il peut être intéressant de régler le deuxième combiné pour qu'il soit capable de répondre à des sollicitations de basse fréquence.

Selon les cas, on pourra choisir de faire en sorte que la régulation s'effectue sur toute la course du premier piston, la raideur du ressort du deuxième combiné étant alors choisie, par rapport à celle du ressort du premier combiné, de telle sorte que la fin de course des deux pistons se produise pour une même charge maximum du premier et du deuxième piston. On peut également choisir que la régulation n'ait lieu que sur une partie de la course du premier piston, auquel cas les raideurs des deux ressorts seront choisies de telle sorte que la fin de course du deuxième piston corresponde à une charge donnant un enfoncement d'une fraction de la course de l'autre.

On peut choisir que la fonction de défreinage due à la mise en communication des première et deuxième chambres soit nettement prépondérante par rapport aux fonctions de suspension et d'amortissement assurée par le deuxième combiné. Dans ce cas, les deuxièmes moyens de suspension opposent une résistance très faible du deuxième piston, dont la course est par ailleurs également faible. On peut même dans ce cas utiliser un ressort de compression situé dans la chambre 32 qui contrôle la descente du deuxième piston (et par ce fait le défreinage) afin de ne permettre le défreinage que dans les cas de fortes sollicitations à l'étirement.

On sait que l'avantage des ressorts pneumatiques réside dans le fait que leur raideur n'est pas constante mais augmente avec la sollicitation du gaz en compression, de sorte que la suspension devient de plus en plus dure à mesure que la charge augmente. Pour cette raison, on choisit avantageusement un ressort pneumatique pour les premiers moyens de suspension.

En revanche, lorsque l'on souhaite que le deuxième module soit capable de répondre à des sollicitations de hautes fréquences, on choisit de préférence le ressort des deuxièmes moyens de suspension sous la forme d'un ressort mécanique. En effet, on sait que les gaz compressibles couramment utilisés dans les ressorts pneumatiques deviennent de moins en moins compressibles lorsque la fréquence des sollicitations auxquelles ils sont soumis augmente, de sorte qu'à l'extrême, en cas de très hautes fréquences, l'effet ressort est pratiquement annulé.

Il faut noter que le ressort mécanique peut être un ressort spirale tel que le ressort 46 de la Figure 1, il peut également s'agir d'un autre ressort tel qu'une rondelle Belleville ou analogue, d'un ressort métallique ou réalisé en tout matériau approprié tel que de l'élastomère.

Selon la gamme des fréquences auxquelles on souhaite que le deuxième module soit capable de répondre, un ressort pneumatique peut tout de même convenir.

## Revendications

1. Dispositif de suspension et d'amortissement (10) comprenant un cylindre d'amortissement (12), un premier piston (14, 314) et un deuxième piston (30) mobiles dans ce cylindre, ainsi que des première, deuxième et troisième chambres (18, 20, 32) contenant du fluide d'amortissement hydraulique, le premier piston (14, 314) étant disposé entre les première et deuxième chambres (18, 20), tandis que le deuxième piston (30) est disposé entre les deuxième et troisième chambres (20, 32), le dispositif comportant, en outre, des premiers moyens de suspension (44, 144, 444) raccordés au premier piston (14, 314) au voisinage d'une première extrémité du cylindre d'amortissement et des deuxièmes moyens de suspension (45, 145) raccordés au deuxième piston (30) au voisinage dudit cylindre d'amortissement,
**caractérisé en ce que** le premier piston (14, 314) est muni de moyens (22, 24, 26, 28) pour réguler le passage du fluide entre les première et deuxième chambres (18, 20), dans les deux sens de circulation entre lesdites chambres et **en ce que** le deuxième piston (30) est muni de moyens (22', 24', 26', 28') pour réguler le passage du fluide entre les deuxième et troisième chambres (20, 30), dans les deux sens de circulation entre lesdites chambres, le premier combiné formé par le premier piston (14, 314) et les premiers moyens de suspension (44, 144, 444) et le deuxième combiné formé par le deuxième piston (30) et les deuxièmes moyens de suspension (45, 145) étant adaptés pour des sollicitations dans des gammes de fréquences différentes.

2. Dispositif selon la revendication 1, **caractérisé en ce qu'**il comporte des moyens (34, 36, 38, 138, 238 ; 234 ; 334, 338, 340, 342) de mise en communication de la première et de la deuxième chambre (18, 20) susceptibles d'être activés et désactivés en fonction de la position du deuxième piston.

3. Dispositif selon la revendication 2, **caractérisé en ce que** les moyens de mise en communication de la première et de la deuxième chambre (18, 20) comprennent un passage de communication (34, 134, 234) présentant une première (36) et une deuxième (38, 138, 238) ouverture respectivement situées dans la première chambre (18) et dans la région de la deuxième chambre (20), la deuxième ouverture étant susceptible d'être plus ou moins obturée par le deuxième piston (30) en fonction de la position qu'occupe ce dernier dans la deuxième chambre (20).

4. Dispositif selon la revendication 3, **caractérisé en ce que** le cylindre d'amortissement comporte un élément de paroi interne (40) et un élément de paroi externe (42) délimitant entre eux un espace annulaire (34) dans lequel est formé le passage de communication (34, 134, 234), les pistons (14, 314 ; 30) étant susceptibles de coulisser sur ledit élément de paroi interne (40).

5. Dispositif selon l'une quelconque des revendications 3 et 4, **caractérisé en ce que** la deuxième ouverture (38, 138, 238) s'étend sur une longueur déterminée de la course du deuxième piston (30), ladite deuxième ouverture étant ainsi susceptible d'être plus ou moins masquée par le deuxième piston (30) en fonction de la position de ce dernier.

6. Dispositif selon la revendication 5, **caractérisé en ce que** la deuxième ouverture comprend une pluralité d'orifices (238) étagés les uns par rapport aux autres.

7. Dispositif selon la revendication 2, **caractérisé en ce que** les moyens de mise en communication de la première et de la deuxième chambre (18, 20) comprennent un passage (334) traversant le premier piston (314) équipé d'une vanne commandée (338) et des moyens de commande de ladite vanne (340, 342, 344) susceptibles d'être activés ou désactivés en fonction de la position du deuxième piston (30).

8. Dispositif selon la revendication 7, **caractérisé en ce que** les moyens de commande de la vanne commandée (338) comprennent un actionneur (342) disposé dans la troisième chambre (32), susceptible d'être sollicité par le deuxième piston (30).

9. Dispositif selon l'une quelconque des revendications 1 à 8, **caractérisé en ce que** les premiers et deuxièmes moyens de suspension (44, 144, 444 ; 45, 145) comprennent respectivement un premier (46, 146, 448) et un deuxième ressort (47, 147) de raideurs différentes.

10. Dispositif selon la revendication 9, **caractérisé en ce que** les premier et deuxième combinés comprenant le premier piston (14, 314) et les premiers moyens de suspension (44, 144, 444) et, respectivement, le deuxième piston (30) et les deuxième moyens de suspension (45, 145), sont respectivement réglés pour répondre à des sollicitations de fréquences moyennes et basses et pour répondre à des sollicitations de hautes fréquences.

11. Dispositif selon l'une quelconque des revendications 1 à 10, **caractérisé en ce que** les premiers moyens de suspension (144, 444) comprennent un ressort pneumatique (146, 448), tandis que les deuxièmes moyens de suspension (45) comprennent un ressort mécanique (47).

12. Dispositif selon l'une quelconque des revendications 1 à 11, **caractérisé en ce qu'**il comprend des moyens pour éviter les phénomènes de cavitation dans au moins l'une des première, deuxième et troisième chambres, lesdits moyens comprenant un réservoir de compensation (180) ayant une chambre hydraulique (181, 254, 481) contenant du fluide sous pression et susceptible d'être mise en communication avec au moins l'une des première, deuxième et troisième chambres (18, 20, 32).

13. Dispositif selon la revendication 12, **caractérisé en ce que** la chambre hydraulique (181, 254, 481) du réservoir de compensation est susceptible d'être mise en communication avec l'une des deuxième et troisième chambres (20, 32) par un premier passage de communication (182, 183 ; 282, 283 ; 274, 276, 278 ; 135, 475) équipé d'un clapet (184 ; 284 ; 484) autorisant seulement la circulation du fluide dans le sens allant de ladite chambre hydraulique vers ladite une des deuxième et troisième chambres et une restriction (185 ; 285 ; 485) limitant la circulation du fluide dans l'autre sens et **en ce que** ladite chambre hydraulique du réservoir de compensation est raccordée à la première chambre (18) par un deuxième passage de communication (188 ; 288, 135 ; 235) équipé d'un clapet (79) autorisant seulement le passage du fluide dans le sens allant de la chambre hydraulique du réservoir de compensation vers la première chambre.

14. Dispositif selon la revendication 13, **caractérisé en ce qu'**il comporte un cylindre de suspension (448) susceptible de coulisser sur le cylindre d'amortissement (12); le cylindre de suspension présentant une première extrémité (448a) fermée sur la paroi du cylindre d'amortissement (12) par des moyens d'étanchéité (450) et une deuxième extrémité (448b) fermée par des moyens (454) d'obturation étanche, le premier piston ayant une tige (15) qui est solidaire du cylindre de suspension, le dispositif comportant des moyens d'obturation (470) qui ferment la première chambre (18) du côté opposé au premier piston (14) et un piston de séparation (456) disposé de telle sorte que les moyens d'obturation (470) se trouvent entre le premier piston (14) et ledit piston de séparation, la chambre hydraulique de compensation (481) étant délimitée entre les moyens d'obturation (470) et le piston de séparation (456), lesdits moyens d'obturation (470) et ledit piston de séparation (456) étant, chacun, pourvus d'un perçage (472, 457) dans lequel la tige (15) du premier piston est susceptible de coulisser avec étanchéité, l'enceinte (460) définie entre le piston de séparation (456) et les moyens d'obturation (454) de la deuxième extrémité du cylindre de suspension (448) contenant un gaz de suspension.

## Patentansprüche

1. Federungs- und Dämpfungsvorrichtung (10) mit einem Dämpfungszylinder (12), einem ersten Kolben (14, 314) und einem zweiten Kolben (30), die in diesem Zylinder beweglich sind, sowie einer ersten, einer zweiten und einer dritten Kammer (18, 20, 32) zur Aufnahme von hydraulischem Dämpfungsfluid, wobei der erste Kolben (14, 314) zwischen der ersten und der zweiten Kammer (18, 20) angeordnet ist, während der zweite Kolben (30) zwischen der zweiten und der dritten Kammer (20, 32) angeordnet ist, welche Vorrichtung außerdem erste Federungsmittel (44, 144, 444) , die nahe einem ersten Ende des Dämpfungszylinders mit dem ersten Kolben (14, 314) verbunden sind, und zweite Federungsmittel (45, 145) aufweist, die nahe dem Dämpfungszylinder mit dem zweiten Kolben (30) verbunden sind,
**dadurch gekennzeichnet, dass** der erste Kolben (14, 314) mit Mitteln (22, 24, 26, 28) zur Regulierung des Durchtritts des Fluids zwischen der ersten und der zweiten Kammer (18, 20) in den beiden Durchflussrichtungen zwischen den Kammern versehen ist und der zweite Kolben (30) mit Mitteln (22', 24', 26', 28') zur Regulierung des Durchtritts des Fluids zwischen der zweiten und dritten Kammer (20, 30) in den beiden Durchflussrichtungen zwischen den Kammern versehen ist, wobei die erste Kombination bestehend aus dem ersten Kolben (14, 314) und den ersten Federungsmitteln (44, 144, 444) und die zweite Kombination bestehend aus dem zweiten Kolben (30) und den zweiten Federungsmitteln (45, 145) für Beanspruchungen in unterschiedlichen Frequenzbereichen ausgelegt sind.

2. Vorrichtung nach Anspruch 1, **dadurch gekennzeichnet, dass** sie Mittel (34, 36, 38, 138, 238; 234; 334, 338, 340, 342) zum Verbinden der ersten und der zweiten Kammer (18, 20) aufweist, die in Abhängigkeit von der Position des zweiten Kolbens in bzw. außer Betrieb gesetzt werden können.

3. Vorrichtung nach Anspruch 2, **dadurch gekennzeichnet, dass** die Mittel zum Verbinden der ersten und der zweiten Kammer (18, 20) einen Verbindungsdurchgang (34, 134, 234) mit einer ersten (36) und einer zweiten (38, 138, 238) Öffnung aufweisen, die in der ersten Kammer (18) bzw. im Bereich der zweiten Kammer (20) vorgesehen sind, wobei die zweite Öffnung durch den zweiten Kolben (30) in Abhängigkeit von der Position, die dieser in der zweiten Kammer (20) einnimmt, mehr oder weniger verschlossen werden kann.

4. Vorrichtung nach Anspruch 3, **dadurch gekennzeichnet, dass** der Dämpfungszylinder ein Innenwandelement (40) und ein Außenwandelement (42) aufweist, welche dazwischen einen Ringraum (34) begrenzen, in dem der Verbindungsdurchgang (34, 134, 234) ausgebildet ist, wobei die Kolben (14, 314; 30) am Innenwandelement (40) gleiten können.

5. Vorrichtung nach einem der Ansprüche 3 und 4, **dadurch gekennzeichnet, dass** sich die zweite Öffnung (38, 138, 238) über eine bestimmte Länge des Hubs des zweiten Kolbens (30) erstreckt, wobei die zweite Öffnung so durch den zweiten Kolben (30) in Abhängigkeit von der Position desselben mehr oder weniger abgedeckt werden kann.

6. Vorrichtung nach Anspruch 5, **dadurch gekennzeichnet, dass** die zweite Öffnung eine Mehrzahl von zueinander versetzt angeordneten Löchern (238) aufweist.

7. Vorrichtung nach Anspruch 2, **dadurch gekennzeichnet, dass** die Mittel zum Verbinden der ersten und der zweiten Kammer (18, 20) einen Durchgang (334), der den ersten Kolben (314) durchsetzt und mit einem gesteuerten Ventil (338) ausgestattet ist, und Mittel (340, 342, 344) zur Steuerung des Ventils aufweisen, die in Abhängigkeit von der Position des zweiten Kolbens (30) in bzw. außer Betrieb gesetzt werden können.

8. Vorrichtung nach Anspruch 7, **dadurch gekennzeichnet, dass** die Mittel zur Steuerung des gesteuerten Ventils (338) eine Betätigungseinrichtung (342) aufweisen, die in der dritten Kammer (32) angeordnet ist und durch den zweiten Kolben (30) beaufschlagt werden kann.

9. Vorrichtung nach einem der Ansprüche 1 bis 8, **dadurch gekennzeichnet, dass** die ersten und zweiten Federungsmittel (44, 144, 444; 45, 145) eine erste Feder (46, 146, 448) bzw. eine zweite Feder (47, 147) von unterschiedlicher Steifigkeit aufweisen.

10. Vorrichtung nach Anspruch 9, **dadurch gekennzeichnet, dass** die erste und zweite Kombination aus dem ersten Kolben (14, 314) und den ersten Federungsmitteln (44, 144, 444) bzw. dem zweiten Kolben (30) und den zweiten Federungsmitteln (45, 145) derart eingestellt sind, dass sie auf Beanspruchungen mittlerer und niedriger Frequenz bzw. auf Beanspruchungen hoher Frequenz reagieren.

11. Vorrichtung nach einem der Ansprüche 1 bis 10, **dadurch gekennzeichnet, dass** die ersten Federungsmittel (144, 444) eine pneumatische Feder (146, 448) aufweisen, während die zweiten Federungsmittel (45) eine mechanische Feder (47) aufweisen.

12. Vorrichtung nach einem der Ansprüche 1 bis 11, **dadurch gekennzeichnet, dass** sie Mittel zur Verhinderung von Kavitationserscheinungen in der ersten, zweiten und/oder dritten Kammer aufweist, welche Mittel einen Ausgleichsbehälter (180) mit einer Hydraulikkammer (181, 254, 481) aufweisen, die ein Fluid unter Druck enthält und mit der ersten, zweiten und/oder dritten Kammer (18, 20, 32) verbunden werden kann.

13. Vorrichtung nach Anspruch 12, **dadurch gekennzeichnet, dass** die Hydraulikkammer (181, 254, 481) des Ausgleichsbehälters mit der zweiten oder dritten Kammer (20, 32) über einen ersten Verbindungsdurchlass (182, 183; 282, 283; 274, 276, 278; 135, 475) verbunden werden kann, der mit einem den Durchfluss des Fluids nur in Richtung von der Hydraulikkammer zur zweiten oder dritten Kammer zulassenden Ventil (184; 284; 484) und einer den Durchfluss des Fluids in der anderen Richtung beschränkenden Drossel (185; 285; 485) ausgestattet ist, und dass die Hydraulikkammer des Ausgleichsbehälters mit der ersten Kammer (18) über einen zweiten Verbindungsdurchlass (188; 288, 135; 235) verbunden ist, der mit einem Ventil (79) versehen ist, das den Durchtritt des Fluids nur in Richtung von der Hydraulikkammer des Ausgleichsbehälters zur ersten Kammer zulässt.

14. Vorrichtung nach Anspruch 13, **dadurch gekennzeichnet, dass** sie einen auf dem Dämpfungszylinder (12) gleitbeweglichen Federungszylinder (448) aufweist, welcher ein an der Wand des Dämpfungszylinders (12) durch Dichtmittel (450) verschlossenes erstes Ende (448a) und ein durch Mittel (454) zum dichten Verschließen geschlossenes zweites Ende (448b) aufweist, wobei der erste Kolben eine Stange (15) besitzt, die mit dem Federungszylinder fest verbunden ist, wobei die Vorrichtung Verschlussmittel (470), die die erste Kammer (18) auf der dem ersten Kolben (14) gegenüberliegenden Seite verschließen, und einen Trennkolben (456) aufweist, welcher derart angeordnet ist, dass sich die Verschlussmittel (470) zwischen dem ersten Kolben (14) und dem Trennkolben befinden, wobei die Ausgleich-Hydraulikkammer (481) zwischen den Verschlussmitteln (470) und dem Trennkolben (456) begrenzt ist, die Verschlussmittel (470) und der Trennkolben (456) jeweils mit einer Bohrung (472, 457) versehen sind, in der die Stange (15) des ersten Kolbens dicht gleiten kann, und die zwischen dem Trennkolben (456) und den Verschlussmitteln (454) des zweiten Endes des Federungszylinders (448) definierte Kammer (460) ein Federungsgas enthält.

## Claims

1. A suspension and damping device (10) comprising a damper cylinder (12), a first piston (14, 314) and a second piston (30) movable in said cylinder, together with first, second, and third chambers (18, 20, 32) containing hydraulic damping fluid, the first piston (14, 314) being disposed between the first and second chambers (18, 20), while the second piston (30) is disposed between the second and third chambers (20, 32), the device further comprising first suspension means (44, 144, 444) connected to the first piston (14, 314) in the vicinity of a first end of the damper cylinder, and second suspension means (45, 145) connected to the second piston (30) in the vicinity of said damper cylinder,
the device being **characterized in that** the first piston (14, 314) is provided with means (22, 24, 26, 28) for regulating the flow of fluid between the first and second chambers (18, 20) in both directions of flow between said chambers, and **in that** the second piston (30) is provided with means (22', 24', 26', 28') for regulating the flow of fluid between the second and third chambers (20, 30) in both flow directions between said chambers, the first unit formed by the first piston (14, 314) and the first suspension means (44, 144, 444), and the second unit formed by the second piston (30) and the second suspension means (45, 145) being tuned to cycling in different ranges of frequencies.

2. A device according to claim 1, **characterized in that** it includes means (34, 36, 38, 138, 238; 234; 334, 338, 340, 342) for putting the first and second chambers (18, 20) into communication and suitable for being activated and deactivated as a function of the position of the second piston.

3. A device according to claim 2, **characterized in that** the means for putting the first and second chambers (18, 20) into communication comprise a communication passage (34, 134, 234) presenting first and second openings (36; 38, 138, 238) situated respectively in the first chamber (18) and in the region of the second chamber (20), the second opening being suitable for being closed to a greater or lesser extent by the second piston (30) as a function of the position it occupies in the second chamber (20).

4. A device according to claim 3, **characterized in that** the damper cylinder includes an inner wall element (40) and an outer wall element (42) defining between them an annular space (34) in which the communication passage (34, 134, 234) is formed, the pistons (14, 314; 30) being suitable for sliding over said inner wall element (40).

5. A device according to claim 3 or claim 4, **characterized in that** the second opening (38, 138, 238) extends over a determined length of the stroke of the second piston (30), said second opening thus being capable of being masked to a greater or lesser extent by the second piston (30) as a function of its position.

6. A device according to claim 5, **characterized in that** the second opening has a plurality of orifices (238) that are staged relative to one another.

7. A device according to claim 2, **characterized in that** the means for putting the first and second chambers (18, 20) into communication comprise a passage (334) passing through the first piston (314) and fitted with a controlled valve (338), and control means (340, 342, 344) for controlling said valve and suitable for being activated or deactivated as a function of the position of the second piston (30).

8. A device according to claim 7, **characterized in that** the control means for the controlled valve (338) comprise an actuator (342) disposed in the third chamber (32) and suitable for being driven by the second piston (30).

9. A device according to any one of claims 1 to 8, **characterized in that** the first and second suspension means (44, 144, 444; 45, 145) comprise respective first and second springs (46, 146, 448; 47, 147) of different stiffnesses.

10. A device according to claim 9, **characterized in that** the first and second units respectively comprising the first piston (14, 314) and the first suspension means (44, 144, 144) and comprising the second piston (30) and the second suspension means (45, 145) are adjusted respectively to respond to cycling at medium and low frequencies, and to respond to cycling at high frequencies.

11. A device according to any one of claims 1 to 10, **characterized in that** the first suspension means (144, 444) comprise a pneumatic spring (146, 448), while the second suspension means (45) comprise a mechanical spring (47).

12. A device according to any one of claims 1 to 11, **characterized in that** it includes means for avoiding cavitation phenomena in at least one of the first, second, and third chambers, said means comprising a compensation tank (180) having a hydraulic chamber (181, 254, 481) containing fluid under pressure and capable of being put into communication with at least one of the first, second, and third chambers (18, 20, 32).

13. A device according to claim 12, **characterized in that** the hydraulic chamber (181, 254, 481) of the compensation tank is capable of being put into communication with one of the second and third chambers (20, 32) via a first communication passage (182, 183; 282, 283; 274, 276, 278; 135, 475) fitted with a check valve (184; 284; 484) allowing fluid flow only in the direction from said hydraulic chamber to said one of the second and third hydraulic chambers, and a constriction (185; 285; 485) restricting fluid flow in the opposite direction, and **in that** said hydraulic chamber of the compensation tank is connected to the first chamber (18) via a second communication passage (188; 288, 135; 235) fitted with a check valve (79) allowing fluid to flow only in the direction going from the hydraulic chamber of the compensation tank towards the first chamber.

14. A device according to claim 13, **characterized in that** it includes a suspension cylinder (448) suitable for sliding on the damper cylinder (12), the suspension cylinder having a first end (448a) closed on the wall of the damper cylinder (12) by sealing means (450), and a second end (448b) closed by leakproof shutter means (454), the first piston having a rod (15) secured to the suspension cylinder, the device including shutter means (470) which close the first chamber (18) on its side opposite from the first piston (14), and a separator piston (456) disposed in such a manner that the shutter means (470) lie between the first piston (14) and said separator piston, the compensation hydraulic chamber (481) being defined between the shutter means (470) and the separator piston (456), each of said shutter means (470) and said separator piston (456) being provided with a respective hole (472, 457) in which the rod (15) of the first piston is capable of sliding in leaktight manner, the enclosure (460) defined between the separator piston (456) and the shutter means (454) shutting the second end of the suspension cylinder (448) containing a suspension gas.
